# EUROPEAN PATENT SPECIFICATION

(11) **EP 2 258 454 B1**
(45) Date of publication and mention of the grant of the patent: **31.10.2012**
(21) Application number: 10151240.8
(22) Date of filing: 20.01.2010
(51) Int. Cl.: A63B 22/02, B29D 29/06, B32B 5/22, B65G 15/30, B65G 15/32, B65G 15/34

(54) **Belt structure**
Bandstruktur
Structure de courroie

(30) Priority: 22.05.2009 TW 98209001 U
(43) Date of publication of application: 08.12.2010
(73) Proprietor: Wang, Shuei Mu, Taichung City 40761 (TW)
(72) Inventor: Wang, Shuei Mu, Taichung City 40761 (TW)
(74) Representative: Chaillot, Geneviève

(56) References cited:
- EP-A1- 0 216 122
- WO-A1-02/053477
- WO-A1-2005/021407
- WO-A1-2008/113195
- WO-A2-2006/076888
- FR-A- 1 443 696
- GB-A- 1 088 066
- US-A- 3 509 006
- US-A- 5 383 828
- US-A1- 2006 073 751
- US-A1- 2006 073 752
- US-A1- 2009 014 084

## Description

The present invention relates to a belt structure that can dispose a shock absorbing structure in the laminating layer to obtain a preferred stepping comfortness.

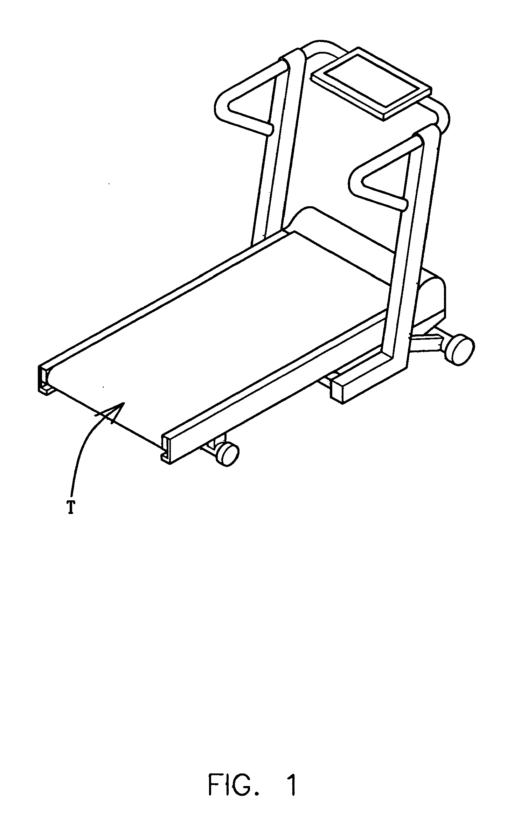

Referring to Fig. 1, a conventional belt structure are coupled together in high frequency manner so that the belt structure can be fixed on front and rear transmission wheels (not shown) respectively, obtaining conveying or stepping function.

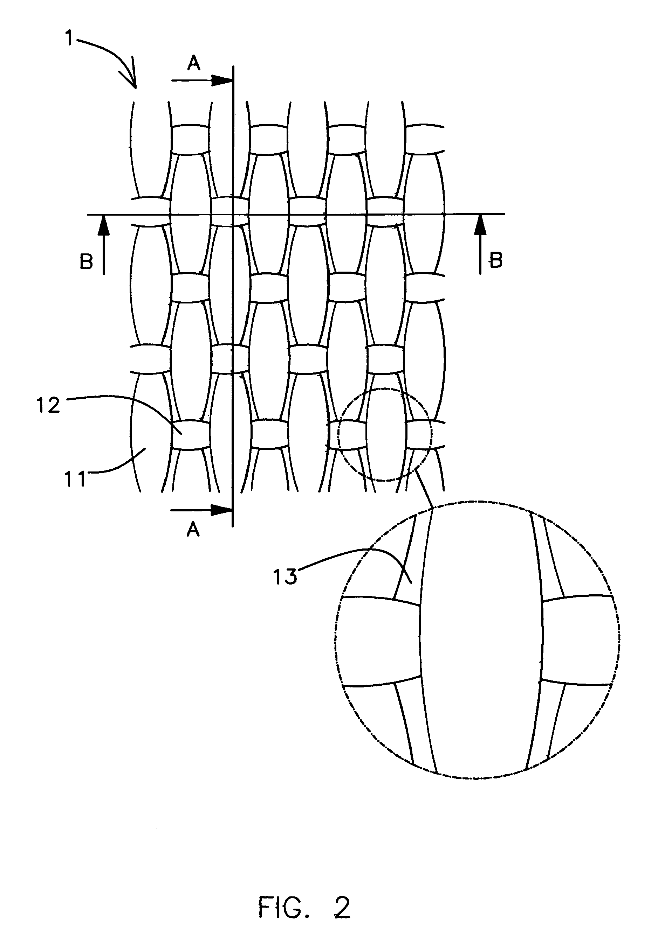

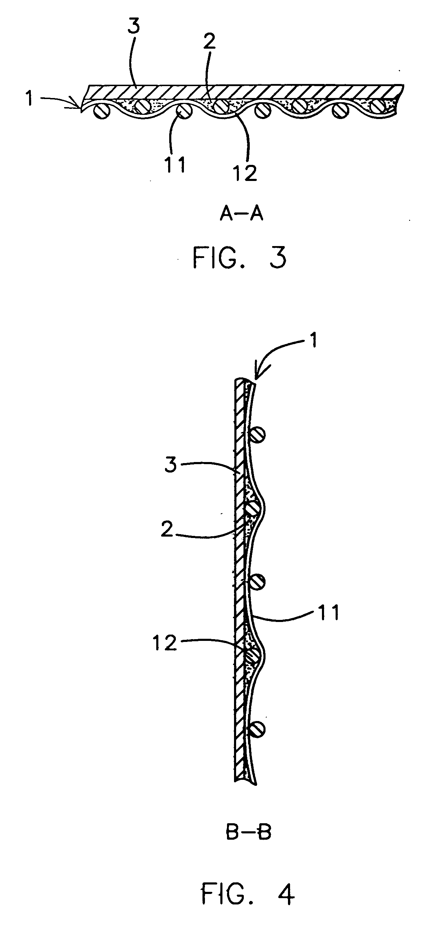

As shown in Figs. 2-4, the conventional belt structure at least comprises:
a cloth layer 1 woven by at least one warp 11 and woof 12, a clearance 13 being formed between the warp 11 and woof 12, an inner surface of the cloth layer 1 being fixed around outer sides of two transmission wheels;
an adhesive layer 2 serving as coating adhesive agent onto an outer side of the cloth layer 1 by using a gel coating machine so that the gel can merge into the clearance 13 of the cloth layer 1 and then the cloth layer 1 being dried by a dryer;
a leather layer 3 adhered on the outer surface of the cloth layer 1 by using the adhesive layer 2.

However, such a conventional belt structure is easy to be peeled off and has poor stepping stress.

The present invention has arisen to mitigate and/or obviate the afore-described disadvantages.

The primary object of the present invention is to provide a belt structure that can dispose a shock absorbing structure in the laminating layer to obtain a preferred stepping comfortness.

The above technical problem is achieved by providing the subject matter defined in the claims.

An object of the invention is a belt structure comprising:
a cloth layer woven by at least one warp and woof and having an outer surface and an inner surface in response to each other, a clearance passing through the inner and the outer surfaces and being formed between the warp and the woof of the cloth layer;
a laminating layer serving as being stepped, the laminating layer being molded to a laminated film and melted to couple with an outer surface of the cloth layer, such that the laminating layer merges into the clearance between the warp and the woof of the cloth layer so that the laminating layer is integrally formed a rough connecting surface.

According to a particular embodiment of the invention, a belt structure in accordance with the present invention comprises:
a cloth layer woven by at least one warp and woof and having an outer surface and an inner surface in response to each other, a clearance passing through the inner and the outer surfaces and being formed between the warp and the woof of the cloth layer;
a laminating layer serving as being stepped, the laminating layer being molded to a laminated film and melted to couple with the outer surface of the cloth layer, such that the laminating layer merges into the clearance between the warp and the woof of the cloth layer so that the laminating layer is integrally formed a rough connecting surface;
a gel layer coated on the inner surface of the cloth layer so as to link with the connecting surface of the laminating layer, thus engaging the cloth layer between the gel layer and the laminating layer.

Fig. 1 is a perspective view of a conventional treadmill;
Fig. 2 is a plan view of a cloth layer of a conventional belt structure;
Fig. 3 is a horizontal cross sectional view of the cloth layer of the conventional belt structure;
Fig. 4 is a longitudinal cross sectional view of the cloth layer of the conventional belt structure;
Fig. 5 is a horizontal cross sectional view of a belt structure in accordance with a first embodiment of the present invention;
Fig. 6 is a longitudinal cross sectional view of the belt structure in accordance with the first embodiment of the present invention;
Fig. 7 is a horizontal cross sectional view of a belt structure in accordance with a second embodiment of the present invention;
Fig. 8 is a cross sectional view showing a laminating layer being provided with a shock absorbing structure;
Fig. 9 is a top plan view of the shock absorbing structure of the belt structure in accordance with the second embodiment of the present invention;
Fig. 10 is a cross sectional view of the shock absorbing structure of the belt structure in accordance with the second embodiment of the present invention;
Fig. 11 is a cross sectional view of the shock absorbing structure of the belt structure in accordance with a third embodiment of the present invention.

The present invention will be clearer from the following description when viewed together with the accompanying drawings, which show, for purpose of illustrations only, the preferred embodiment in accordance with the present invention.

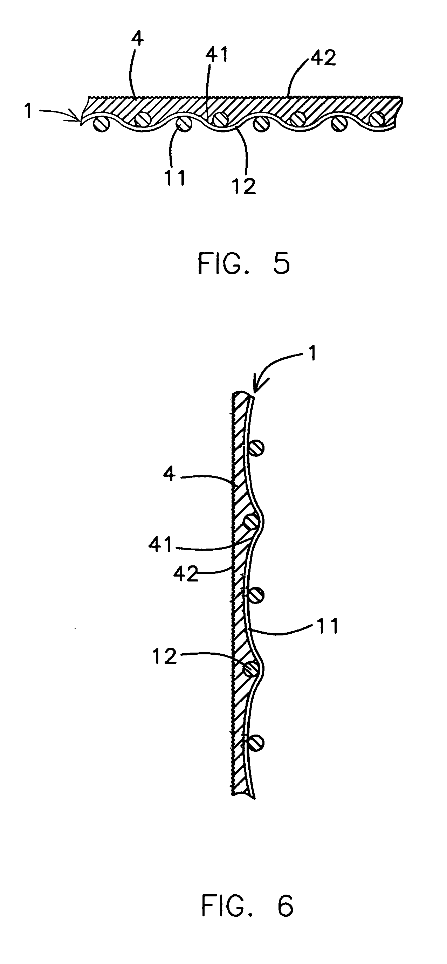

Referring to Figs. 5 and 6, a belt structure in accordance with a first embodiment of the present invention being used as in conveyor or treadmill field and at least comprises: a cloth layer 1 woven by at least one warp 11 and woof 12 and having an outer surface and an inner surface in response to each other, a clearance passing through the inner and the outer surfaces and being formed between the warp 11 and the woof 12 of the cloth layer 1, wherein the warp 11 and the woof 12 can be formed from yarns with anti-static agent or the cloth layer 1 is soaked in the anti-static agent to obtain anti-static effect;
a laminating layer 4 serving as being stepped, the laminating layer 1 being molded to a laminated film and melted to couple with the outer surface of the cloth layer 1, such that the laminating layer 4 merges into the clearance between the warp 11 and the woof 12 of the cloth layer 1 so that the laminating layer 4 is integrally formed a rough connecting surface 41, the connecting surface 41 engaging with the clearance of the cloth layer 1, thereby enhancing adhering area, anti-peel strength, and tensile strength. The laminating layer 4 further includes rough patterns 42 formed thereon to obtain anti-slip purpose.

Form above-mentioned description, the laminating layer 4 couples with the cloth layer 1 without through laminating process, and an area of the connecting surface 41 is larger than that of the conventional conveyor belt, because the connecting surface 41 is merged in the clearance between the warp 11 and the woof 12 of the cloth layer 1, a multi-directional stepping stress can be endured so that the laminating layer 4 and the cloth layer 1 are coupled securely to obtain larger stepping stress. Furthermore, because the connecting surface 41 is integrally formed with the laminating layer 4, having a preferred spread effect of stress to improve tensile strength of the cloth layer 1.

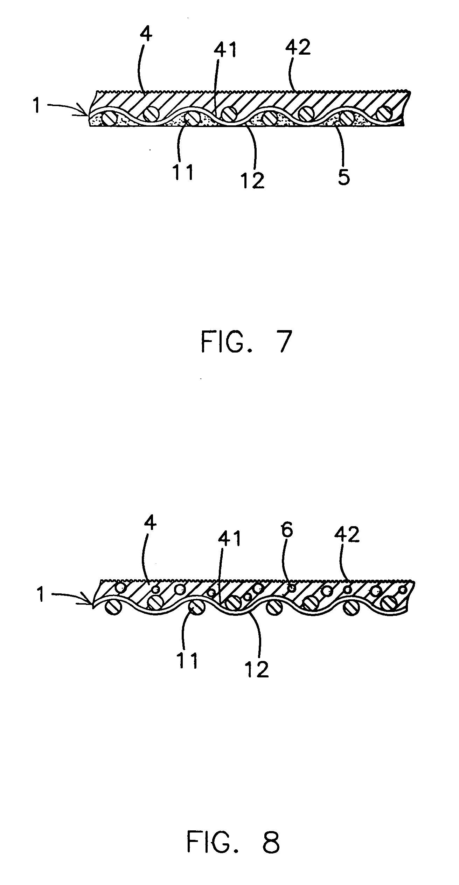

Referring to Fig. 7, a belt structure according to a second embodiment of the present invention at lease comprises:
a cloth layer 1 woven by at least one warp 11 and woof 12, each warp 11 and woof 12 having an outer surface and an inner surface in response to each other, a clearance passing through the inner and the outer surfaces and being formed between the warp 11 and the woof 12;
a laminating layer 4 serving as being stepped, the laminating layer 1 being molded to a laminated film and melted to couple with an outer surface of the cloth layer 1, such that the laminating layer 4 merges into the clearance between the warp 11 and the woof 12 of the cloth layer 1 so that the laminating layer 4 is integrally formed a rough connecting surface 41;
a gel layer 5 coated on an inner surface of the cloth layer 1 so as to link with the connecting surface 41 of the laminating layer 4, thus engaging the cloth layer 1 between the gel layer 5 and the laminating layer 4. The gel layer 5 can improve the anti-wear capacity, and the cloth layer 1, the laminating layer 4, and the gel layer 5 can be joined securely. It is to be noted that the gel layer 5 is added with anti-static agent to prevent from generating static electricity.

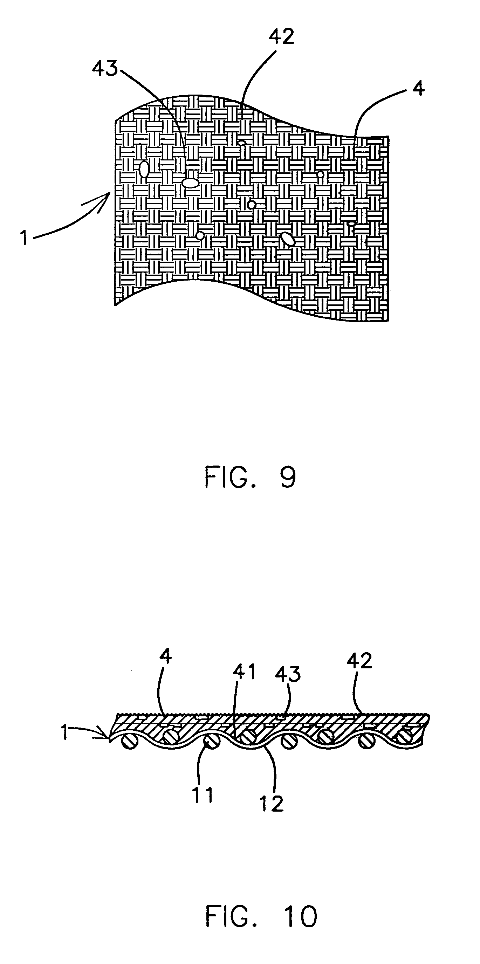

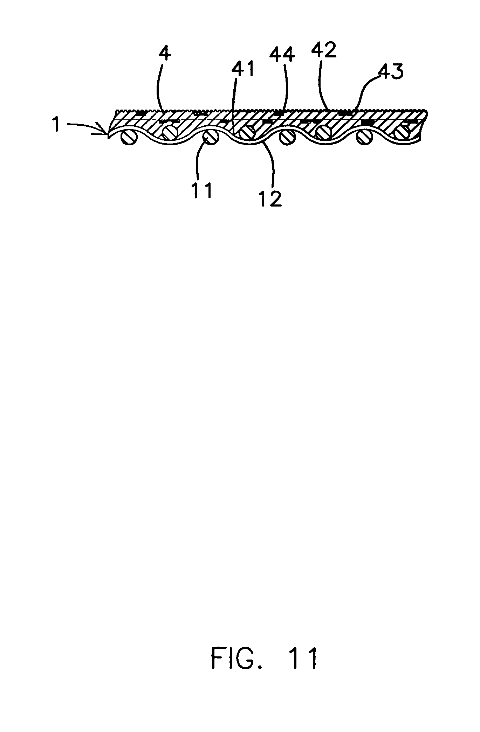

The laminating layer 4 is provided with a shock absorbing structure to obtain stepping comfortness. As shown in Fig. 8, the shock absorbing structure includes a plurality of hollow inflation balls 6 or a plurality of hollow glass beads disposed on the laminating layer 4. As illustrated in Figs. 9 and 10, a plurality of air chambers 43 are arranged in the laminating layer 4 to decrease the weight of the laminating layer 4, wherein the chambers 43 are rolled to concavely form on the laminating layer 4, and the chambers 43 can be arranged in a sole, multiple successive, or partially successive manner, the laminating layer 4 can be a double-layer design. As shown in Fig. 11, the chamber 43 is filled with shock absorbing medium, such as gel, fluid, or gas to achieve shock absorbing purpose.

While we have shown and described various embodiments in accordance with the present invention, it is clear to those skilled in the art that further embodiments may be made without departing from the scope of the present invention.

## Claims

1. A belt structure comprising:
a cloth layer woven by at least one warp and woof and having an outer surface and an inner surface in response to each other, a clearance passing through the inner and the outer surfaces and being formed between the warp and the woof of the cloth layer;
a laminating layer serving as being stepped, the laminating layer being molded to a laminated film and melted to couple with an outer surface of the cloth layer, such that the laminating layer merges into the clearance between the warp and the woof of the cloth layer so that the laminating layer is integrally formed a rough connecting surface;
wherein the laminating layer is provided with a shock absorbing structure including a plurality of hollow inflation balls or a plurality of hollow glass beads disposed on the laminating layer, and
wherein a plurality of air chambers are arranged in the laminating layer, the chambers are rolled to concavely form on the laminating layer, and the chambers can be arranged in a sole manner, in a multiple successive manner or in a partially successive manner and the chamber is filled with shock absorbing medium.

2. The belt structure as claimed in claim 1, further comprising a gel layer coated on the inner surface of the cloth layer so as to link with the connecting surface of the laminating layer, thus engaging the cloth layer between the gel layer and the laminating layer.

3. The belt structure as claimed in claim 1 or 2, wherein the laminating layer further includes rough patterns formed thereon.

4. The belt structure as claimed in claim 2 or 3, wherein the gel layer is added with anti-static agent.

5. The belt structure as claimed in any of claims 1 to 4, wherein the cloth layer and the laminating layer are added with anti-static agent.

## Patentansprüche

1. Bandstruktur, umfassend:
eine Gewebelage, die mit mindestens einem Kettfaden und Schussfaden gewebt ist und eine Außenfläche und eine Innenfläche als Reaktion aufeinander aufweist, wobei ein Zwischenraum durch die Innen- und die Außenfläche verläuft und zwischen dem Kettfaden und dem Schussfaden der Gewebelage gebildet ist,
eine Laminierschicht, die dazu dient, betreten zu werden, wobei die Laminierschicht auf eine laminierte Folie geformt ist und geschmolzen ist, um mit einer Außenfläche der Gewebelage gekoppelt zu sein, sodass die Laminierschicht in den Zwischenraum zwischen Kettfaden und Schussfaden der Gewebelage übergeht, damit die Laminierschicht einteilig eine raue Verbindungsfläche gebildet ist;
wobei die Laminierschicht mit einer stoßdämpfenden Struktur versehen ist, einschließlich einer Vielzahl hohler Aufblaskugeln oder einer Vielzahl hohler Glasperlen, die auf der Laminierschicht angeordnet sind, und
wobei eine Vielzahl von Luftkammern in der Laminierschicht angeordnet sind, die Kammern gerollt sind, um konkav auf der Laminierschicht gebildet zu sein und die Kammern auf eine einzelne Art und Weise, auf eine mehrfach aufeinanderfolgende Art und Weise oder auf eine teilweise aufeinanderfolgende Art und Weise angeordnet sein können und die Kammer mit einem stoßdämpfenden Mittel gefüllt ist.

2. Bandstruktur nach Anspruch 1, ferner umfassend eine Gelschicht, die auf die Innenfläche der Gewebelage aufgetragen ist, um sich mit der Verbindungsfläche der Laminierschicht zu verbinden, wodurch die Gewebelage zwischen der Gelschicht und der Laminierschicht berührt wird.

3. Bandstruktur nach Anspruch 1 oder 2, wobei die Laminierschicht ferner raue Muster aufweist, die darauf gebildet sind.

4. Bandstruktur nach Anspruch 2 oder 3, wobei der Gelschicht ein Antistatikmittel zugesetzt ist.

5. Bandstruktur nach einem der Ansprüche 1 bis 4, wobei der Gewebelage und der Laminierschicht ein Antistatikmittel zugesetzt ist.

## Revendications

1. Structure de bande comprenant :
une couche de tissu tissée par au moins une chaîne et trame et ayant une surface externe et une surface interne en réponse l'une à l'autre, un espace libre passant à travers les surfaces interne et externe et étant formé entre la chaîne et la trame de la couche de tissu ;
une couche de stratification destinée à ce que l'on marche dessus, la couche de stratification étant moulée sur un film stratifié et fondue pour se coupler avec une surface externe de la couche de tissu, de telle sorte que la couche de stratification se fusionne à l'espace libre entre la chaîne et la trame de la couche de tissu afin que la couche de stratification forme d'un seul tenant une surface de liaison rugueuse ;
la couche de stratification comportant une structure d'absorption des chocs comprenant une pluralité de sphères de gonflage creuses ou une pluralité de billes de verre creuses disposées sur la couche de stratification, et
une pluralité de chambres d'air étant agencées dans la couche de stratification, les chambres étant laminées pour se former de manière concave sur la couche de stratification, et les chambres pouvant être agencées d'une seule manière, d'une manière successive multiple ou d'une manière partiellement successive et la chambre étant remplie d'un milieu d'absorption des chocs.

2. Structure de bande selon la revendication 1, comprenant en outre une couche de gel déposée sur la surface interne de la couche de tissu de façon à se lier à la surface de liaison de la couche de stratification, engageant ainsi la couche de tissu entre la couche de gel et la couche de stratification.

3. Structure de bande selon la revendication 1 ou 2, dans laquelle la couche de stratification comprend en outre des motifs rugueux formés sur celle-ci.

4. Structure de bande selon la revendication 2 ou 3, dans laquelle la couche de gel se voit ajouter un agent antistatique.

5. Structure de bande selon l'une quelconque des revendications 1 à 4, dans laquelle la couche de tissu et la couche de stratification se voient ajouter un agent antistatique.
